(19) Europäisches Patentamt
European Patent Office
Office européen des brevets

(11) **EP 2 205 845 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **08802401.3**

(22) Anmeldetag: **19.09.2008**

(51) Int Cl.:
*F02D 41/00* *(2006.01)* *F02D 41/14* *(2006.01)*
*F02D 41/18* *(2006.01)* *F02D 19/02* *(2006.01)*
*F02D 11/10* *(2006.01)*

(86) Internationale Anmeldenummer:
**PCT/EP2008/007891**

(87) Internationale Veröffentlichungsnummer:
**WO 2009/040058 (02.04.2009 Gazette 2009/14)**

(54) **VERFAHREN ZUR REGELUNG EINES STATIONÄREN GASMOTORS**

METHOD FOR CONTROLLING A STATIONARY GAS MOTOR

PROCÉDÉ DE RÉGULATION D'UN MOTEUR À GAZ STATIONNAIRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.09.2007 DE 102007045195**

(43) Veröffentlichungstag der Anmeldung:
**14.07.2010 Patentblatt 2010/28**

(73) Patentinhaber: **MTU FRIEDRICHSHAFEN GMBH 88045 Friedrichshafen (DE)**

(72) Erfinder:
• **BALDAUF, Johannes**
  **88239 Wangen (DE)**
• **KLÄSER-JENEWEIN, Ludwig**
  **88699 Frickingen (DE)**
• **SMUDA, Peer**
  **71065 Sindelfingen (DE)**

(56) Entgegenhaltungen:
**EP-A- 1 323 913    US-B1- 6 189 523
US-B1- 6 340 005**

**Beschreibung**

Die Erfindung betrifft eine Verfahren zur Regelung eines stationären Gasmotors, bei dem eine Drehzahl-Regelabweichung aus einer Soll-Drehzahl sowie einer Ist-Drehzahl berechnet wird, aus der Drehzahl-Regelabweichung über einen Drehzahlregler als Stellgröße ein Soll-Moment bestimmt wird und an Hand des Soll-Moments ein Soll-Volumenstrom bestimmt wird. Ferner besteht das Verfahren darin, dass ein Gemisch-Drosselklappenwinkel zum Festlegen eines Gemisch-Volumenstroms sowie eines Ist-Gemischdrucks in einem Receiverrohr vor den Einlassventilen des Gasmotors in Abhängigkeit des Soll-Volumenstroms festgelegt wird und ein Gas-Drosselklappenwinkel zum Festlegen eines Gas-Volumenstroms als Gasanteil in einem Gas-Luftgemisch ebenfalls in Abhängigkeit des Soll-Volumenstroms festgelegt wird.

Stationäre Gasmotoren werden häufig als Antrieb für Notstrom-Generatoren oder Schnellbereitschaftsaggregate verwendet. Dabei wird der Gasmotor bei einem Lambdawert von zum Beispiel 1.7, also im Magerbetrieb mit Luftüberschuss, betrieben. Typischerweise umfasst der Gasmotor eine Gasdrosselklappe zum Festlegen des Gasanteils im Gas-Luftgemisch, einen Mischer zum Zusammenführen des brennbaren Gases mit der Luft, einen Verdichter als Teil eines Abgasturboladers, einen Kühler und eine Gemischdrosselklappe. Über die Gemischdrosselklappe wird der angesaugte Volumenstrom im Receiverrohr vor den Einlassventilen des Gasmotors und damit auch der Gemischdruck im Receiverrohr festgelegt.

Aus der EP 1 158 149 A1 ist ein stationärer Gasmotor zum Antreiben eines Generators bekannt. Gesteuert wird der Gasmotor, indem aus der Motorleistung über eine Kennlinie ein Soll-Lambda als Führungsgröße berechnet wird. An Hand des Soll-Lambdas berechnet ein elektronisches Motorsteuergerät einen Gasmengen-Sollwert, über welchen dann die Gasdrosselklappe entsprechend eingestellt wird. In einer zweiten Ausführungsform wird der Soll-Lambdawert aus einer Gemischdruck-Regelabweichung berechnet. Die Gemischdruck-Regelabweichung bestimmt sich aus dem detektierten Ist-Gemischdruck im Receiverrohr und dem Soll-Gemischdruck, welcher wiederum aus der Motorleistung über eine Kennlinie festgelegt wird. In einer dritten Ausführungsform wird ergänzend zur zweiten Ausführungsform der Gasmengen-Sollwert zur Einstellung der Gasdrosselklappe in Abhängigkeit der Stellung eines Verdichter-Bypassventils und der Drehzahl-Regelabweichung korrigiert. Gemeinsames Merkmal aller drei Ausführungsformen ist die Einstellung der Gasdrosselklappe auf einen Soll-Lambdawert. Für den praktischen Betrieb bedeutet dies: Bei einer Änderung der Leistungsvorgabe wird zuerst die Stellung der Gemischdrosselklappe als Leistungssteuerorgan verändert. Dies bewirkt, dass der angesaugte Gemischvolumenstrom sich ebenfalls ändert. Da zunächst die Stellung der Gasdrosselklappe konstant bleibt, ändert sich auch der Gas-Volumenstrom nicht. Hieraus resultiert ein sich veränderndes Ist-Lambda. Bei einer beispielsweise in Schließrichtung betätigten Gemischdrosselklappe wird eine Anfettung des Gemisches verursacht, wodurch eine Leistungsänderung des Gasmotors bewirkt wird. Als Reaktion auf diese Leistungsänderung werden dann der Soll-Lambdawert, der Gasmengen-Sollwert und die Stellung der Gasdrosselklappe verändert. Bei dieser Art der Regelung ist die Reaktionszeit, zum Beispiel bei Laständerung, kritisch, da systembedingt ein Eingriff in die Lambdaregelung träge ist.

Auch die DE 103 46 983 A1 beschreibt einen Gasmotor und ein Verfahren zur Regelung des Kraftstoffgemisches. Bei diesem Verfahren wird in einem ersten Schritt eine Ist-Druckdifferenz des Luftmassenstroms an einem Venturimischer erfasst und in einem zweiten Schritt aus der gemessenen Ist-Leistung des Gasmotors eine Soll-Druckdifferenz des Luftmassenstroms bestimmt. In einem dritten Schritt wird die Ist-Druckdifferenz der Soll-Druckdifferenz angenähert, indem über die Stellung der Gasdrosselklappe die zugeführte Gasmenge verändert wird. In einem vierten Schritt wird die sich einstellende Ist-Leistung des Gasmotors erneut detektiert und die Gemischdrosselklappe so eingestellt, dass die Soll-Ist-Abweichung der Druckdifferenz des Luftmassenstroms im Venturimischer sich verringert. Dieser sequentielle Ablauf wird iterativ so lange durchgeführt bis die Soll-Ist-Abweichung der Druckdifferenz kleiner als ein Grenzwert wird. Da eine Änderung der Stellung der Gemisch-Drosselklappe eine Leistungsänderung des Gasmotors bewirkt, muss die Stellung der Gas-Drosselklappe zur Kompensation der Leistungsänderung des Gasmotors nachgeregelt werden. Dies kann unter Umständen zum Überschwingen der Stellgrößen führen.

Aus der US 6,340,005 B1 ist ebenfalls ein Verfahren zur Regelung eines stationären Gasmotors bekannt, bei dem anhand einer Drehzahl-Regelabweichung über einen Drehzahlregler als Stellgröße ein Gas-Drosselklappenwinkel bestimmt wird. Über den Gas-Drosselklappenwinkel wird der zugeführte Gas-Volumenstrom festgelegt. Ergänzend wird über eine Gemischsteuerung ein Gemisch-Drosselklappenwinkel berechnet. Der Gemisch-Drosselklappenwinkel bestimmt wiederum den Gemisch-Volumenstroms und den Ist-Gemischdrucks in einem Receiverrohr vor den Einlassventilen des Gasmotors. Der Erfindung liegt die Aufgabe zu Grunde, ein Verfahren zur Regelung eines stationären Gasmotors mit verbesserter Regelgüte zu entwerfen.

Die Aufgabe wird durch ein Verfahren gelöst, bei dem eine Drehzahl-Regelabweichung aus einer Soll-Drehzahl sowie einer Ist-Drehzahl berechnet wird, aus der Drehzahl-Regelabweichung über einen Drehzahlregler als Stellgröße ein Soll-Moment bestimmt wird und an Hand des Soll-Moments dann ein Soll-Volumenstrom bestimmt wird. In Abhängigkeit des Soll-Volumenstroms wiederum wird ein Gemisch-Drosselklappenwinkel zum Festlegen eines Gemisch-Volumenstroms sowie eines Ist-Gemischdrucks in einem Receiverrohr vor den Einlassventilen des Gasmotors festgelegt.

Ebenfalls in Abhängigkeit des Soll-Volumenstroms wird ein Gas-Drosselklappenwinkel zum Festlegen eines Gas-Volumenstroms als Gasanteil in einem Gas-Luftgemisch festgelegt. Zentraler Gedanke der Erfindung ist also die parallele Ansteuerung der Gasdrosselklappe und der Gemischdrosselklappe in Abhängigkeit derselben Steuergröße, hier dem Soll-Volumenstrom. Neben einer verkürzten Reaktionszeit ist ein präziseres Einschwingen mit verbesserter Einstellbarkeit des Gesamtsystems von Vorteil. Zudem ist auf Grund der parallelen Ansteuerung eine Lambda-Nachführung nicht erforderlich. Insgesamt gestattet die Erfindung eine gleichmäßige Regelung der Motorleistung.

Der Soll-Volumenstrom wird aus dem Soll-Moment berechnet, indem das Soll-Moment begrenzt wird und dem begrenzten Soll-Moment über ein Kennfeld in Abhängigkeit der Ist-Drehzahl der Soll-Volumenstrom zugeordnet wird. Die Begrenzung des Soll-Moments erfolgt in Abhängigkeit der Ist-Drehzahl und zusätzlich in Abhängigkeit eines erkannten Fehlerzustands des Systems, zum Beispiel bei Sensorausfall. Mitberücksichtigt wird ein zulässiges mechanisches Maximalmoment. Über die Begrenzung wird die Betriebssicherheit des Gesamtsystems verbessert.

Festgelegt wird der Gemisch-Drosselklappenwinkel, indem aus dem Soll-Volumenstrom ein Soll-Gemischdruck berechnet wird, aus dem Soll-Gemischdruck und einem Ist-Gemischdruck im Receiverrohr eine Gemischdruck-Regelabweichung ermittelt wird und aus der Gemischdruck-Regelabweichung über einen Gemischdruckregler eine Stellgröße zur Festlegung des Gemisch-Drosselklappenwinkels berechnet wird. Bei der Berechnung des Soll-Gemischdrucks werden neben den Systemkonstanten, beispielsweise das Hubvolumen, ein Soll-Lambda und eine Gemischtemperatur im Receiverrohr verwendet. Bei einem Gasmotor in V-Anordnung sieht das Verfahren vor, dass ein erster Gemisch-Drosselklappenwinkel für die A-Seite zum Festlegen eines ersten Gemisch-Volumenstroms sowie eines ersten Ist-Gemischdrucks in einem ersten Receiverrohr und ein zweiter Gemisch-Drosselklappenwinkel für die B-Seite zum Festlegen eines zweiten Gemisch-Volumenstroms sowie eines zweiten Ist-Gemischdrucks in einem zweiten Receiverrohr berechnet werden.

In den Zeichnungen ist ein bevorzugtes Ausführungsbeispiel dargestellt. Es zeigen:

Figur 1      ein Gesamtschaubild,

Figur 2      ein Blockschaltbild zur Ansteuerung der Gasdrosselklappe und der Gemischdrosselklappen,

Figur 3      einen Regelkreis zur Regelung des Gemischdrucks und

Figur 4      einen Programm-Ablaufplan.

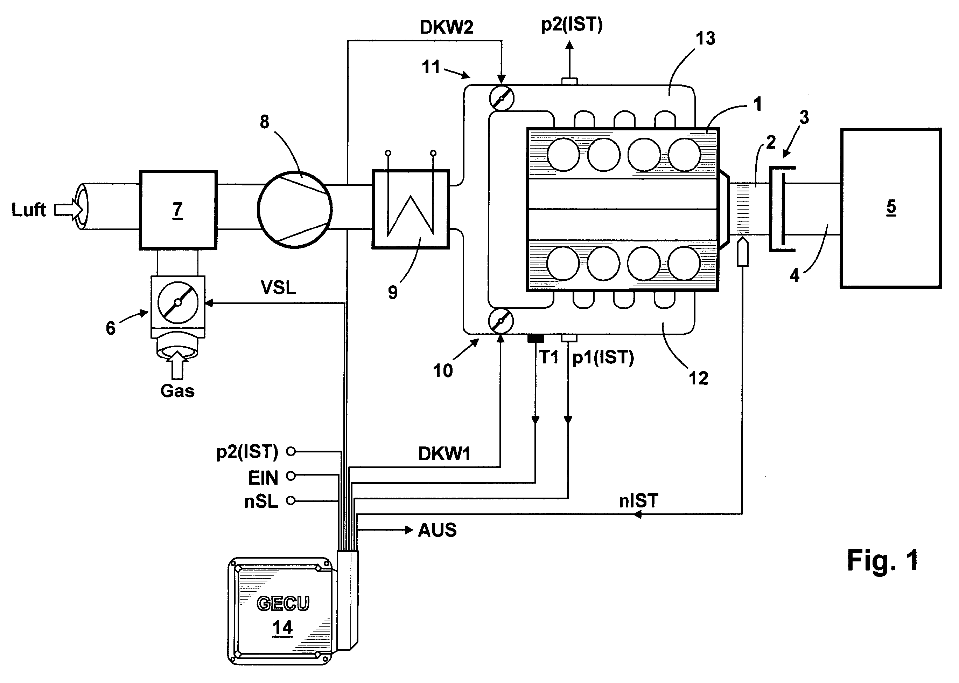

Die Figur 1 zeigt ein Gesamtschaubild eines stationären Gasmotors 1 in V-Anordnung. Der Gasmotor 1 treibt über eine Welle 2, eine Kupplung 3 und eine Welle 4 einen Generator 5 an. Über den Generator 5 wird elektrische Energie erzeugt, welche in ein elektrisches Netz eingespeist wird. Dem Gasmotor 1 sind folgende mechanische Komponenten zugeordnet: eine Gasdrosselklappe 6 zum Festlegen eines zugeführten Gas-Volumenstroms, zum Beispiel Endgas, ein Mischer 7 zur Zusammenführung von Luft und Gas, ein Verdichter 8 als Teil eines Abgasturboladers, ein Kühler 9, eine erste Gemischdrosselklappe 10 auf der A-Seite des Gasmotors 1 und eine zweite Gemischdrosselklappe 11 auf der B-Seite des Gasmotors 1.

Die Betriebsweise des Gasmotors 1 wird durch ein elektronisches Motorsteuergerät 14 (GECU) festgelegt. Das elektronische Motorsteuergerät 14 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb des Gasmotors 1 relevanten Betriebsdaten in Kennfeldern/Kennlinien appliziert. Über diese berechnet das elektronische Motorsteuergerät 14 aus den Eingangsgrößen die Ausgangsgrößen. In der Figur 1 sind als Eingangsgrößen dargestellt: ein erster Ist-Gemischdruck p1(IST) sowie eine Gemischtemperatur T1, welche beide im ersten Receiverrohr 12 gemessen werden, ein zweiter Ist-Gemischdruck p2(IST), welcher im zweiten Receiverrohr 13 gemessen wird, eine Ist-Drehzahl nIST des Gasmotors 1, eine Soll-Drehzahl nSL, die von einem nicht dargestellten Anlagenregler des Generators 5 vorgegeben wird, und eine Eingangsgröße EIN. Unter der Eingangsgröße EIN sind die weiteren Eingangssignale zusammengefasst, beispielsweise die Öltemperatur. Als Ausgangsgrößen des elektronischen Motorsteuergeräts 14 sind dargestellt: das Signal eines Soll-Volumenstroms VSL zur Ansteuerung der Gasdrosselklappe 6, das Signal eines ersten Gemisch-Drosselklappenwinkels DKW1 zur Ansteuerung der ersten Gemischdrosselklappe 10, das Signal eines zweiten Gemisch-Drosselklappenwinkels DKW2 zur Ansteuerung der zweiten Gemischdrosselklappe 11 und ein Signal AUS. Das Signal AUS steht stellvertretend für die weiteren Signale zur Steuerung und Regelung des Gasmotors 1.

Die Anordnung besitzt folgende allgemeine Funktionalität: Über die Stellung der Gasdrosselklappe 6 wird ein Gas-Volumenstrom, welcher dem Mischer 7 zugeführt wird, eingestellt. Die Position der ersten Gemischdrosselklappe 10 definiert ein erstes Gemischvolumen und damit den ersten Ist-Gemischdruck p1(IST) im ersten Receiverrohr 12 vor den Einlassventilen des Gasmotors 1. Über die zweite Gemischdrosselklappe 11 wird ein zweites Gemischvolumen und damit der zweite Ist-Gemischdruck p2(IST) im zweiten Receiverrohr 13 vor den Einlassventilen des Gasmotors 1

3

festgelegt.

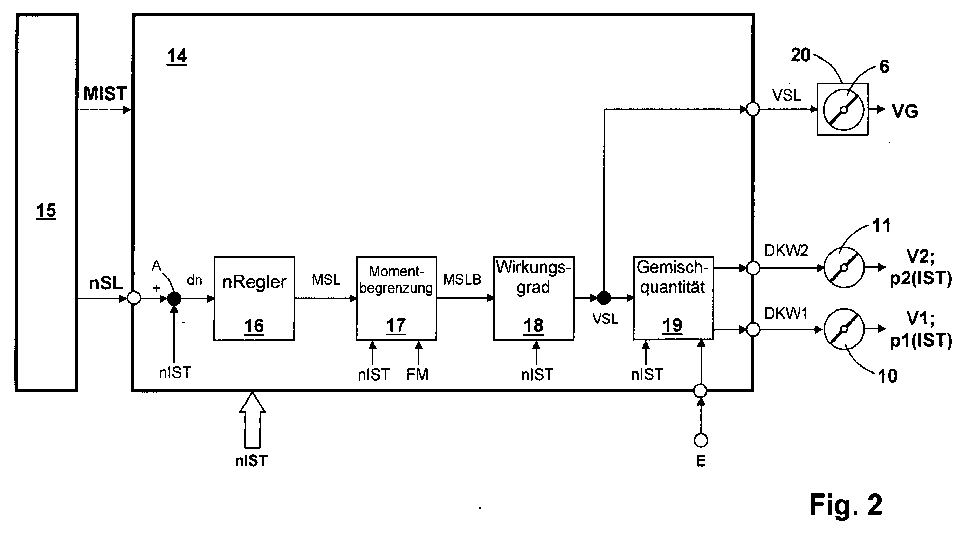

In der Figur 2 ist ein Blockschaltbild zur Ansteuerung der beiden Gemischdrosselklappen 10 sowie 11 und der Gasdrosselklappe 6 dargestellt. Das Bezugszeichen 15 kennzeichnet den Anlagenregler des Generators. Das Bezugszeichen 14 kennzeichnet als reduziertes Blockschaltbild das elektronische Motorsteuergerät, wobei die dargestellten Elemente die Programmschritte eines ausführbaren Programms repräsentieren. Die Eingangsgrößen des elektronischen Motorsteuergeräts 14 sind bei dieser Darstellung die Soll-Drehzahl nSL sowie optional ein Ist-Moment MIST, welche vom Anlagenregler 15 geliefert werden, die Ist-Drehzahl nIST und eine weitere Größe E. Unter der weiteren Größe E sind ein Soll-Lambda, ein Hubvolumen der Zylinder des Gasmotors, der Liefergrad im Sinne einer Zylinderfüllung und die Kraftstoffeigenschaft zusammengefasst. Die Ausgangsgrößen sind der erste Gemisch-Drosselklappenwinkel DKW1 zur Ansteuerung der ersten Gemischdrosselklappe 10, der zweite Gemisch-Drosselklappenwinkel DKW2 zur Ansteuerung der zweiten Gemischdrosselklappe 11 und der Soll-Volumenstrom VSL zur Ansteuerung der Gasdrosselklappe 6.

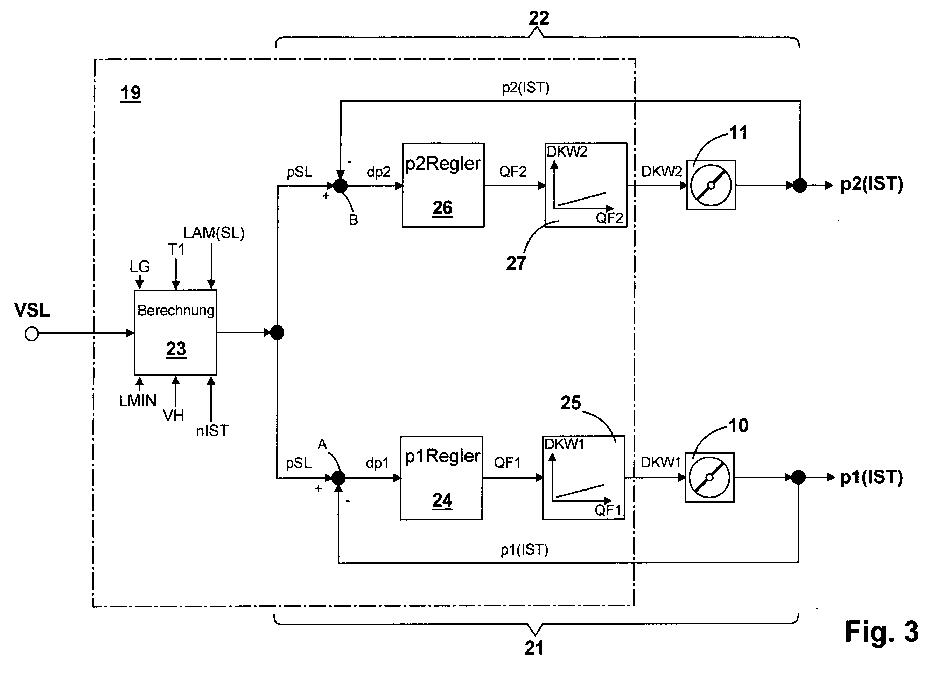

Vom Anlagenregler 15 wird als Leistungswunsch die Soll-Drehzahl nSL vorgegeben, zum Beispiel 1500 1/min, welche einer Frequenz von 50 Hz entspricht. An einem Punkt A wird aus der Soll-Drehzahl nSL und der Ist-Drehzahl nIST eine Drehzahl-Regelabweichung dn berechnet. Aus der Drehzahl-Regelabweichung dn berechnet ein Drehzahlregler 16 als Stellgröße ein Soll-Moment MSL. In der Praxis ist der Drehzahlregler 16 als PIDT1-Regler ausgeführt. Über eine Momentbegrenzung 17 wird das Soll-Moment MSL auf einen minimalen und maximalen Wert limitiert. Das Ausgangssignal entspricht einem begrenzten Soll-Moment MSLB. Die Parameter für die Grenzwerte der Momentbegrenzung 17 sind die Ist-Drehzahl nIST und ein Fehler-Zustandssignal FM, welches dann gesetzt wird, wenn ein Fehler im Gesamtsystem erkannt wird, zum Beispiel bei einem defekten Drucksensor. Als weiterer Parameter kann noch ein zulässiges mechanisches Maximalmoment vorgesehen sein. Liegt der Wert des Soll-Moments MSL im zulässigen Bereich, so entspricht der Wert des begrenzten Soll-Moments MSLB dem Wert des Soll-Moments MSL. Über einen Wirkungsgrad 18 wird dem begrenzten Soll-Moment MSLB in Abhängigkeit der Ist-Drehzahl nIST ein Soll-Volumenstrom VSL zugeordnet. Hierzu ist in der Einheit Wirkungsgrad 18 ein entsprechendes Kennfeld hinterlegt. Der Soll-Volumenstrom VSL ist die Eingangsgröße der Gemischquantität 19 und zugleich die Eingangsgröße der Gasdrosselklappe 6. Über die Gemischquantität 19 wird aus dem Soll-Volumenstrom VSL in Abhängigkeit der Ist-Drehzahl nIST und der Eingangsgröße E der erste Gemisch-Drosselklappenwinkel DKW1 und der zweite Gemisch-Drosselklappenwinkel DKW2 berechnet. Die Einheit Gemischquantität 19 wird näher in Verbindung mit der Figur 3 erläutert. Mit dem ersten Gemisch-Drosselklappenwinkel DKW1 wird die erste Gemischdrosselklappe 10 angesteuert. Über die erste Gemischdrosselklappe 10 wird ein erster Gemisch-Volumenstrom V1 und der erste Ist-Gemischdruck p1(IST) eingestellt. Mit dem zweiten Gemisch-Drosselklappenwinkel DKW2 wird die zweite Gemischdrosselklappe 11 angesteuert, über welche ein zweiter Gemisch-Volumenstrom V2 und der zweite Ist-Gemischdruck p2(IST) eingestellt wird. Mit dem Soll-Volumenstrom VSL wird ebenfalls die Gasdrosselklappe 6 angesteuert. In dieser ist eine Verarbeitungselektronik 20 integriert, über welche dem Wert des Soll-Volumenstroms VSL eine entsprechende Querschnittsfläche und ein entsprechender Winkel zugeordnet werden. Über die Gasdrosselklappe 6 wird ein Gas-Volumenstrom VG als Gasanteil des Gas-Luftgemisches eingestellt.

Wie in der Figur 2 dargestellt, werden die beiden Gemischdrosselklappen 10 und 11 sowie die Gasdrosselklappe 6 parallel in Abhängigkeit derselben Vorgabegröße, hier: der Soll-Volumenstrom VSL, angesteuert. Gegenüber dem Stand der Technik mit sequentieller Ansteuerung und Lambda-Nachregelung bietet das Verfahren nach der Erfindung die Vorteile einer verkürzten Reaktionszeit und eines präziseren Einschwingens mit verbesserter Einstellbarkeit des Gesamtsystems. Zudem ist auf Grund der parallelen Ansteuerung eine Lambda-Nachführung nicht erforderlich. Insgesamt erlaubt die Erfindung eine gleichmäßige Regelung der Motorleistung.

Die Figur 3 zeigt einen ersten Regelkreis 21 zur Regelung des ersten Ist-Gemischdrucks p1(IST) im ersten Receiverrohr und einen zweiten Regelkreis 22 zur Regelung des zweiten Ist-Gemischdrucks p2(IST) im zweiten Receiverrohr. Mit Bezugszeichen 23 ist eine Berechnungseinheit zur Berechnung des Soll-Gemischdrucks pSL dargestellt. Die Eingangsgröße des ersten Regelkreises 21 ist der Soll-Gemischdruck pSL. Die Ausgangsgröße des ersten Regelkreises 21 entspricht dem ersten Ist-Gemischdruck p1(IST). Der erste Regelkreis 21 umfasst eine Vergleichstelle A, einen ersten Gemischdruckregler 24, eine erste Kennlinie 25 und als Regelstrecke die erste Gemischdrosselklappe 10 zur Festlegung des zugeführten Gemischvolumenstroms und des ersten Ist-Gemischdrucks p1(IST). Die Eingangsgröße des zweiten Regelkreises 22 ist ebenfalls der Soll-Gemischdruck pSL. Die Ausgangsgröße des zweiten Regelkreises 22 ist der zweite Ist-Gemischdruck p2(IST). Der zweite Regelkreis umfasst eine Vergleichsstelle B, einen zweiten Gemischdruckregler 26, eine zweite Kennlinie 27 und als Regelstrecke die zweite Gemischdrosselklappe 11 zur Festlegung des zugeführten Gemischvolumenstroms und des zweiten Ist-Gemischdrucks p2(IST). Die Berechnungseinheit 23, die beiden Vergleichsstellen (A, B), die beiden Gemischregler (24, 26) und die beiden Kennlinien (25, 27) sind in der Einheit Gemischquantität 19 integriert, wie dies durch eine strichpunktierte Linie dargestellt ist.

Aus dem vorgegebenen Volumenstrom VSL wird über die Berechnungseinheit 23 der Soll-Gemischdruck pSL gemäß folgender Formel berechnet:

$$pSL = \{VSL \cdot 2\,[1+LMIN \cdot LAM(SL)] \cdot T1 \cdot pNORM\} / [nIST \cdot VH \cdot LG \cdot TNORM]$$

Hierin bedeuten:

| | |
|---|---|
| pSL | Soll-Gemischdruck |
| VSL | Soll-Volumenstrom |
| LMIN | Kraftstoffeigenschaft |
| LAM(SL) | Soll-Lambda |
| T1 | Temperatur im ersten Receiverrohr |
| pNORM | Normluftdruck auf NN (1013 mbar) |
| nIST | aktuelle Ist-Drehzahl |
| VH | Hubvolumen des Motors |
| LG | Liefergrad (Zylinderfüllung) |
| TNORM | Normtemperatur 273,15 K |

Der Soll-Gemischdruck pSL ist die Führungsgröße für die beiden Regelkreise 21 und 22. An der Vergleichsstelle A wird der Soll-Gemischdruck pSL mit dem ersten Ist-Gemischdruck p1(IST) verglichen. Das Ergebnis entspricht der ersten Gemischdruck-Regelabweichung dp1. Aus dieser berechnet der erste Gemischdruckregler 24, typischerweise ein PIDT1-Regler, als Stellgröße eine erste Querschnittsfläche QF1. Dieser wird über die erste Kennlinie 25 der erste Gemisch-Drosselklappenwinkel DKW1 zugeordnet. Mit dem ersten Gemisch-Drosselklappenwinkel DKW1 wird dann die erste Gemischdrosselklappe 10 angesteuert, welche der Regelstrecke entspricht. Die Ausgangsgröße der ersten Gemischdrosselklappe 10 ist der erste Soll-Gemischdruck p1(IST), welcher der Regelgröße entspricht. Der erste Ist-Gemischdruck p1(IST) wird über ein (nicht dargestelltes) optionales Filter auf die Vergleichsstelle A zurückgeführt. Damit ist der erste Regelkreis 21 geschlossen.

An der Vergleichsstelle B wird der Soll-Gemischdruck pSL mit dem zweiten Ist-Gemischdruck p2(IST) verglichen. Das Ergebnis entspricht der zweiten Gemischdruck-Regelabweichung dp2. Aus dieser berechnet der zweite Gemischdruckregler 26 als Stellgröße eine zweite Querschnittsfläche QF2, welcher über die zweite Kennlinie 27 der zweite Gemisch-Drosselklappenwinkel DKW2 zugeordnet wird. Mit dem zweiten Gemisch-Drosselklappenwinkel DKW2 wird dann die zweite Gemischdrosselklappe 11 angesteuert, welche der Regelstrecke entspricht. Die Ausgangsgröße der zweiten Gemischdrosselklappe 11 ist der zweite Soll-Gemischdruck p2(IST), welcher der Regelgröße entspricht. Der zweite Soll-Gemischdruck p2(IST) wird über ein (nicht dargestelltes) optionales Filter auf die Vergleichsstelle B zurückgeführt. Damit ist der zweite Regelkreis 22 geschlossen.

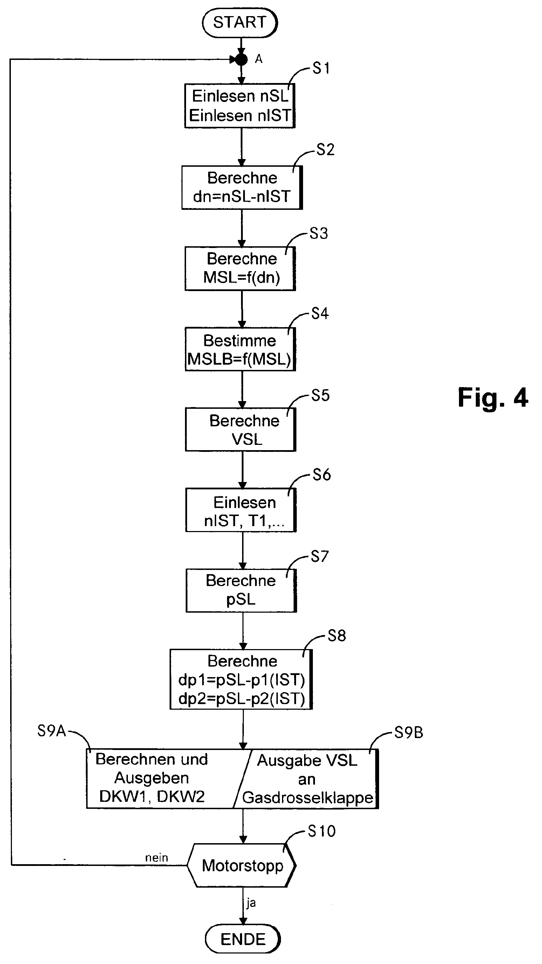

In der Figur 4 ist ein Programm-Ablaufplan dargestellt, welcher Teil des im elektronischen Motorsteuergerät 14 implementierten ausführbaren Programms ist. Bei S1 werden die Soll-Drehzahl nSL sowie die Ist-Drehzahl nIST eingelesen und bei S2 die Drehzahl-Regelabweichung dn berechnet. An Hand der Drehzahl-Regelabweichung dn bestimmt der Drehzahlregler als Stellgröße das Soll-Moment MSL, S3. Danach wird das Soll-Moment MSL auf eine obere und untere Grenze limitiert. Der Ausgangswert entspricht dem begrenzten Soll-Moment MSLB. Liegt der Wert des Soll-Moments MSL im zulässigen Bereich, dann entspricht der Wert des begrenzten Soll-Moments MSLB dem Wert des Soll-Moments MSL. Bei S5 wird über die Einheit Wirkungsgrad (Figur 2: Bezugszeichen 18) dem begrenzten Soll-Moment MSLB in Abhängigkeit der Ist-Drehzahl nIST über ein Kennfeld ein Soll-Volumenstrom VSL zugeordnet. Anschließend werden bei S6 der Wert des Soll-Volumenstroms VSL, die Ist-Drehzahl nIST, die Temperatur T1 im ersten Receiverrohr und die Systemkonstanten eingelesen. Bei S7 wird über die Berechnungseinheit (Figur 3: Bezugszeichen 23) der Soll-Gemischdruck pSL an Hand der zuvor beschriebenen Formel berechnet. Bei S8 werden die erste Gemischdruck-Regelabweichung dp1 und die zweite Gemischdruck-Regelabweichung dp2 bestimmt. Im Anschluss daran wird bei S9A in Abhängigkeit der ersten Gemischdruck-Regelabweichung dp1 sowie der zweiten Gemischdruck-Regelabweichung dp2 der erste Gemisch-Drosselklappenwinkel DKW1 und auch der zweite Gemisch-Drosselklappenwinkel DKW2 berechnet und ausgegeben. Gleichzeitig wird bei S9B der Wert des Soll-Volumenstroms VSL an die Gasdrosselklappe ausgegeben. Bei S10 wird geprüft, ob ein Motorstopp vorliegt. Ist dies nicht der Fall, Abfrageergebnis S10: nein, so wird zum Punkt A zurückverzweigt und das Programm bei S1 fortgesetzt. Wird bei S10 ein Motorstopp erkannt, Abfrageergebnis S10: ja, so ist das Programm beendet.

Bezugszeichen

| 1 | Gasmotor |
| --- | --- |
| 2 | Welle |
| 3 | Kupplung |
| 4 | Welle |
| 5 | Generator |
| 6 | Gasdrosselklappe |
| 7 | Mischer |
| 8 | Verdichter |
| 9 | Kühler |
| 10 | erste Gemischdrosselklappe |
| 11 | zweite Gemischdrosselklappe |
| 12 | erstes Receiverrohr |
| 13 | zweites Receiverrohr |
| 14 | elektronisches Motorsteuergerät (GECU) |
| 15 | Anlagenregler |
| 16 | Drehzahlregler |
| 17 | Momentbegrenzung |
| 18 | Wirkungsgrad |
| 19 | Gemischquantität |
| 20 | Verarbeitungselektronik |
| 21 | erster Regelkreis |
| 22 | zweiter Regelkreis |
| 23 | Berechnungseinheit |
| 24 | erster Gemischdruckregler |
| 25 | erste Kennlinie |
| 26 | zweiter Gemischdruckregler |
| 27 | zweite Kennlinie |

**Patentansprüche**

1. Verfahren zur Regelung eines stationären Gasmotors (1), bei dem eine Drehzahl-Regelabweichung (dn) aus einer Soll-Drehzahl (nSL) sowie einer Ist-Drehzahl (nIST) berechnet wird, aus der Drehzahl-Regelabweichung (dn) über einen Drehzahlregler (16) als Stellgröße ein Soll-Moment (MSL) bestimmt wird, an Hand des Soll-Moments (MSL) ein Soll-Volumenstrom (VSL) bestimmt wird, bei dem ein Gemisch-Drosselklappenwinkel (DKW1, DKW2) zum Festlegen eines Gemisch-Volumenstroms (V1, V2) sowie eines Ist-Gemischdrucks (p1(IST), p2(IST)) in einem Receiverrohr (12, 13) vor den Einlassventilen des Gasmotors (1) in Abhängigkeit des Soll-Volumenstroms (VSL) festgelegt wird und bei dem ein Gas-Drosselklappenwinkel zum Festlegen eines Gas-Volumenstroms (VG) als Gasanteil in einem Gas-Luftgemisch ebenfalls in Abhängigkeit des Soll-Volumenstroms (VSL) festgelegt wird.

2. Verfahren nach Anspruch 1,
   **dadurch gekennzeichnet,**
   **dass** der Soll-Volumenstrom (VSL) berechnet wird, indem das Soll-Moment (MSL) begrenzt wird und dem begrenzten Soll-Moment (MSLB) über ein Kennfeld in Abhängigkeit der Ist-Drehzahl (nIST) der Soll-Volumenstrom (VSL) zugeordnet wird.

3. Verfahren nach Anspruch 2,
   **dadurch gekennzeichnet,**
   **dass** die Begrenzung in Abhängigkeit der Ist-Drehzahl (nIST) festgesetzt wird.

4. Verfahren nach Anspruch 3,
   **dadurch gekennzeichnet,**
   **dass** die Begrenzung zusätzlich in Abhängigkeit eines erkannten Fehlerzustands des Systems (FM) und eines zulässigen mechanischen Maximalmoments festgesetzt wird.

5. Verfahren nach Anspruch 1,
   **dadurch gekennzeichnet,**
   **dass** der Gemisch-Drosselklappenwinkel (DKW1, DKW2) festgelegt wird, indem aus dem Soll-Volumenstrom (VSL) ein Soll-Gemischdruck (pSL) berechnet wird, aus dem Soll-Gemischdruck (pSL) und einem Ist-Gemischdruck (p1(IST), p2(IST)) im Receiverrohr (12, 13) eine Gemischdruck-Regelabweichung (dp1, dp2) ermittelt wird und aus der Gemischdruck-Regelabweichung (dp1, dp2) über einen Gemischdruckregler (24, 26) eine Stellgröße (QF1, QF2) zur Festlegung des Gemisch-Drosselklappenwinkels (DKW1, DKW2) berechnet wird.

**6.** Verfahren nach Anspruch 5,
**dadurch gekennzeichnet,**
**dass** bei der Berechnung des Soll-Gemischdrucks (pSL) die Ist-Drehzahl (nIST), ein konstantes Soll-Lambda (LAM(SL)), ein Motorhubvolumen (VH), ein Liefergrad (LG) entsprechend einer Zylinderfüllung, eine Gemischtemperatur (T1) im Receiverrohr (12), ein Normluftdruck (pNORM), eine Normtemperatur (TNORM) und eine Kraftstoffeigenschaft (LMIN) mitberücksichtigt werden.

**7.** Verfahren nach Anspruch 1,
**dadurch gekennzeichnet,**
**dass** bei einem Gasmotor in V-Anordnung ein erster Gemisch-Drosselklappenwinkel (DKW1) für die A-Seite zum Festlegen eines ersten Gemisch-Volumenstroms (V1) sowie eines ersten Ist-Gemischdrucks (p1(IST)) in einem ersten Receiverrohr (12) und ein zweiter Gemisch-Drosselklappenwinkel (DKW2) für die B-Seite zum Festlegen eines zweiten Gemisch-Volumenstroms (V2) sowie eines zweiten Ist-Gemischdrucks (p2(IST)) in einem zweiten Receiverrohr (13) berechnet werden.

**Claims**

**1.** Method for controlling a stationary gas motor (1), in which a rotational speed control error (dn) is calculated on the basis of a setpoint rotational speed (nSL) and an actual rotational speed (nACT), a setpoint torque (MSL) is determined as a manipulated variable on the basis of the rotational speed control error (dn) by means of a rotational speed controller (16), a setpoint volume flow (VSL) is determined on the basis of the setpoint torque (MSL), in which a mixture throttle valve angle (DKW1, DKW2) for defining a mixture volume flow (V1, V2) and an actual mixture pressure (p1(ACT), p2(ACT)) is defined in a receiver pipe (12, 13) upstream of the inlet valves of the gas motor (1), as a function of the setpoint volume flow (VSL), and in which a gas throttle valve angle for defining a gas volume flow (VG) as a gas proportion in a gas air mixture is also defined as a function of the setpoint volume flow (VSL).

**2.** Method according to Claim 1,
**characterized**
**in that** the setpoint volume flow (VSL) is calculated by limiting the setpoint torque (MSL) and assigning the setpoint volume flow (VSL) to the limited setpoint torque (MSLB) by means of a characteristic diagram as a function of the actual rotational speed (nACT).

**3.** Method according to Claim 2,
**characterized**
**in that** the limitation is set as a function of the actual rotational speed (nACT).

**4.** Method according to Claim 3,
**characterized**
**in that** the limitation is additionally set as a function of a detected fault state of the system (FM) and of a maximum permissible mechanical torque.

**5.** Method according to Claim 1,
**characterized**
**in that** the mixture throttle valve angle (DKW1, DKW2) is defined by calculating a setpoint mixture pressure (pSL) on the basis of the setpoint volume flow (VSL), determining a mixture pressure control error (dp1, dp2) on the basis of the setpoint mixture pressure (pSL) and an actual mixture pressure (p1(ACT), p2(ACT)) in the receiver pipe (12, 13) and calculating a manipulated variable (QF1, QF2) for defining the mixture throttle valve angle (DKW1, DKW2) on the basis of the mixture pressure control error (dp1, dp2) by means of a mixture pressure controller (24, 26).

**6.** Method according to Claim 5,
**characterized**
**in that** during the calculation of the setpoint mixture pressure (pSL), the actual rotational speed (nACT), a constant setpoint lambda (LAM(SL)), an engine swept volume (VH), a volumetric efficiency (LG) corresponding to a cylinder charge, a mixture temperature (T1) in the receiver pipe (12), a standard air pressure (pSTAND), a standard temperature (TSTAND) and a fuel property (LMIN) are also taken into account.

7. Method according to Claim 1,
   **characterized**
   **in that** in a gas motor in a V arrangement a first mixture throttle valve angle (DKW1) is calculated for the A side in order to define a first mixture volume flow (V1) and a first actual mixture pressure (p1(ACT)) in a first receiver pipe (12), and a second mixture throttle valve angle (DKW2) is calculated for the B side in order to define a second mixture volume flow (V2) and a second actual mixture pressure (p2(ACT)) in a second receiver pipe (13).

**Revendications**

1. Procédé de régulation d'un moteur à gaz stationnaire (1), au moyen duquel un écart de vitesse de rotation (dn) est calculé à partir d'une vitesse de rotation théorique (nSL) et d'une vitesse de rotation réelle (nIST), un couple théorique (MSL) est déterminé à partir de l'écart de vitesse de rotation (dn) par l'intermédiaire d'un régulateur de vitesse de rotation (16) en tant que grandeurs de réglage, un débit volumique théorique (VSL) est déterminé sur la base du couple théorique (MSL), débit volumique pour lequel un angle de papillon de mélange (DKW1, DKW2) servant à fixer un débit volumique de mélange (V1, V2) et une pression de mélange réelle (p1(IST), p2(IST)) à l'intérieur d'un conduit récepteur (12, 13), en amont des soupapes d'admission du moteur à gaz (1), est déterminé en fonction du débit volumique théorique (VSL) et pour lequel un angle de papillon des gaz servant à fixer un débit volumique de gaz (VG) en tant que fraction de gaz dans un mélange air-gaz est déterminé également en fonction du débit volumique théorique (VSL).

2. Procédé selon la revendication 1,
   **caractérisé en ce que** le débit volumique théorique (VSL) est calculé en limitant le couple théorique (MSL) et en associant au couple théorique limité (MSLB) le débit volumique théorique (VSL) par l'intermédiaire d'un diagramme caractéristique en fonction de la vitesse de rotation réelle (nIST).

3. Procédé selon la revendication 2,
   **caractérisé en ce que** la limitation est établie en fonction de la vitesse de rotation réelle (nIST).

4. Procédé selon la revendication 3,
   **caractérisé en ce que** la limitation est en outre établie en fonction d'un état de défaut détecté du système (FM) et d'un couple mécanique maximal admissible.

5. Procédé selon la revendication 1,
   **caractérisé en ce que** l'angle de papillon de mélange (DKW1, DKW2) est établi en calculant une pression de mélange théorique (pSL) à partir du débit volumique théorique (VSL), en déterminant un écart de pression de mélange (dp1, dp2) à partir de la pression de mélange théorique (psL) et d'une pression de mélange réelle (p1(IST), p2(IST)) à l'intérieur du conduit récepteur (12, 13) et en calculant une grandeur de réglage (QF1, QF2) à partir de l'écart de pression de mélange (dp1, dp2) par l'intermédiaire d'un régulateur de pression de mélange (24, 26) pour établir l'angle de papillon de mélange (DKW1, DKW2).

6. Procédé selon la revendication 5,
   **caractérisé en ce que**, lors du calcul de la pression de mélange théorique (pSL), la vitesse de rotation réelle (nIST), un Lambda théorique constant (LAM(SL)), un volume de cylindrée (VH), un rendement volumétrique (LG) correspondant à un remplissage des cylindres, une température de mélange (T1) à l'intérieur du conduit récepteur (12), une pression d'air normale (pNORM), une température normale (TNORM) et une qualité de carburant (LMIN) sont pris en compte.

7. Procédé selon la revendication 1,
   **caractérisé en ce que**, dans le cas d'un moteur à gaz en V, un premier angle de papillon de mélange (DKW1) pour le côté A servant à établir un premier débit volumique de mélange (V1) et une première pression de mélange réelle (p1(IST)) à l'intérieur d'un premier conduit récepteur (12) et un deuxième angle de papillon de mélange (DKW2) pour le côté B servant à établir un deuxième débit volumique de mélange (V2) et une deuxième pression de mélange réelle (p2(IST)) à l'intérieur d'un deuxième conduit récepteur (13) sont calculés.

Fig. 1

EP 2 205 845 B1

Fig. 2

Fig. 3

START

A ─── S1

Einlesen nSL
Einlesen nIST

S2

Berechne
dn=nSL-nIST

S3

Berechne
MSL=f(dn)

S4

Bestimme
MSLB=f(MSL)

S5

Berechne
VSL

**Fig. 4**

S6

Einlesen
nIST, T1,...

S7

Berechne
pSL

S8

Berechne
dp1=pSL-p1(IST)
dp2=pSL-p2(IST)

S9A

Berechnen und
Ausgeben
DKW1, DKW2

S9B

Ausgabe VSL
an
Gasdrosselklappe

S10

nein ── Motorstopp

ja

ENDE

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1158149 A1
- DE 10346983 A1
- US 6340005 B1